# EUROPEAN PATENT APPLICATION

(11) **EP 1 120 329 A1**
(43) Date of publication of application: **01.08.2001**
(21) Application number: 00101384.6
(22) Date of filing: 24.01.2000
(51) Int. Cl.: B62D 3/12

(54) **Improvements in casings and racks for rack and pinion steering systems**

(71) Applicant: Visteon Automotive Systems Inc., Dearborn, MI 48126 (US)
(72) Inventor: Ballester, Adrian, 1667 Buenos Aires (AR)
(74) Representative: Kador & Partner

(57) **Abstract**

Improvements in casings (1) for pinion-rack bar steering systems particularly addressed to eliminate undesirable noises in said casing, comprising a casing box (1) rigidly affixed to the vehicle's chassis wherein a rack bar (2) is assembled slidingly seated on an end bushing (4) having said rack bar (2) a toothed portion (6') in assembling relationship with a pinion (3) affixed to the vehicle's steering column end. Said bar (2) being loaded by joint loading generating axial and radial components which define a spacing effect between said pinion (3) and rack teeth (6') as well as a returning effect of said rack (2) to its normal position thus generating noises. Said improvements comprise said toothed portion (6') on the upper face of a detachable piece (6) assembled with radial free play in a longitudinal key slot (7) of said rack bar (2) which in turn is slidingly assembled in two guiding bushings (4,5), said detachable piece (6) assembled on elastic means (9) arranged at the bottom of said key slot (7).

## Description

### Field of the Invention

The present invention is related to improvements in casings for pinion-rack bar steering systems, particularly to improvements in steering casings for avoiding noises created by rack bar-pinion teeth play. By means of the use of the present invention, said rack bar is re-positioned to its normal assembled position thus avoiding said bothering and dangerous noises.

The purposed improvements are directed to mechanical or powered steering casings by which the axial movement of steering wheel is converted in lateral movements of joint assemblies which in turn control vehicle's wheels movements.

One of the objects of the present invention is to improve the structural characteristics of steering casing inner mechanism which comprises two main parts in functional relationship due to their mutual assembly: a pinion and a rack bar. One of the objects of this invention is to keep this assembly relationship into proper and predetermined technical tolerances. Thus there are no possibilities of changing said relationship during functioning of said steering mechanism avoiding relative movements between said pinion-rack bar assembly and thus avoiding noises during vehicle's driving.

In order to solve this problem frequently find in practice the present invention includes as a part of the steering mechanism a double guided rack bar system which allows the absorption of axial stresses generated in vehicle's joint assemblies.

Moreover the present invention also includes as a part of said rack bar a floating toothed arrangement lodged in a longitudinal groove of said bar and on the frontal face of which assembling teeth are conformed. Floating positioning of said arrangement determines an optimal assembly relationship between pinion and rack bar teeth.

### Background of the invention

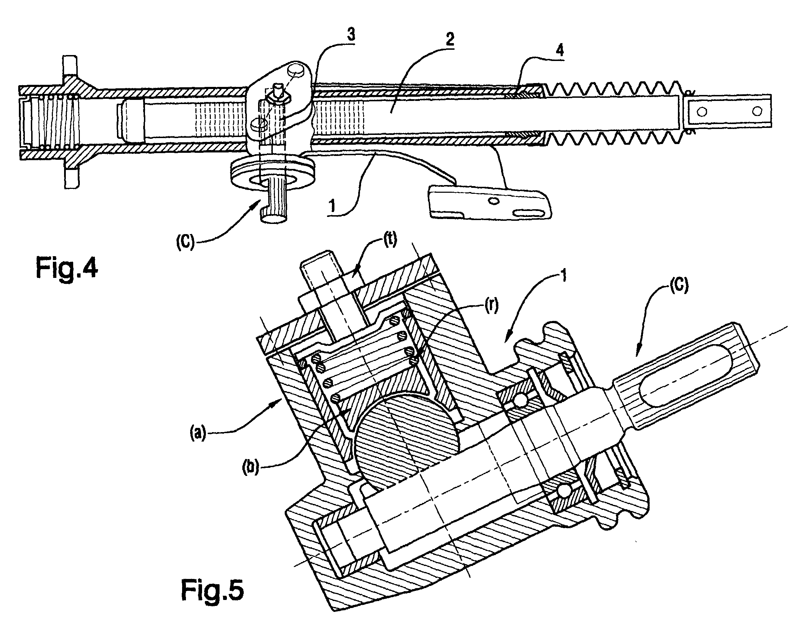

Problems related to conventional steering mechanisms are well known in the art, basically those related to the lack of return capability of rack bar assembly as a consequence of an improper adjustment of conventional adjusting rack bar bushing. This conventional steering casing, illustrated in the attached Figures 4 and 5 by means of plan and traverse sectional views, comprise a closed casing (1) assembled to the steering column inner end (c) and normally attached to the vehicle's chassis.

The inner mechanism of said casing 1 comprises a rack bar 2 seated inside said casing on an end bushing 4 which allows an axial movement of said bar and a pinion 3 attached to said column end (c). Rack bar 2 is affixed to the joint mechanism of one of the vehicle's wheels and casing end is affixed to joint mechanism of the other vehicle's wheel. This kind of connection is directed to powered steering systems, which are one of the goals of the purposed improvements.

In this conventional systems casing box 1 a rack bar-pinion adjusting device (see Figure 5) is included for keeping a silent and proper assembly relationship between said pinion-rack bar systems. Said device assembled inside housing (a) of said casing box 1 comprises a rack bar push bushing (b) pressed by a spring (r) seated on a washer related to bushing stress regulating bolt (t), a locknut for fixing bolt (t) on a cap (ta) of said housing and an o-ring for avoiding fluid leakage.

In this kind of conventional steering systems rack bar 2 presents two guiding points, one of them defined by a guiding bushing (4) on which rack bar end is assembled, and the other guiding point is defined by a joining point between pinion 3 and said rack bar in an intermediate point of its length. The assembly force between pinion and rack bar teeth is kept by the above-described mechanism.

The above-cited problems are not properly overcome using the above-described guiding devices in conventional steering mechanisms and even when some benefit effect is shown some other functional problems are also created. That is, as is already known in the art, joint loads are divided in two components perpendicular between each other, an axial component against the rack bar movement and a radial component pushing rack bar upwards trending to separate pinion and rack bar teeth and creating noises when said teeth are re-positioned.

Conventional device used for solving this problem uses for creating a counter-effect against said rack bar movement the above cited spring loaded pushing bushing whose adjustment limits the rack bar linear movement. Even when some benefit effects are reached bushing adjustment rigidize the mechanism restricting the capability of said rack to return to its normal position. This is known as "return capability".

One of the objects of the present invention is to solve this problem by means of a novel structural modification in one of the steering casing components. The following goals are reached with the purposed improvements:
- Keeping pinion and rack bar teeth permanently assembled;
- Keeping rack bar return capability if uncoupling movements are created during functioning;
- Optimal adaptation to minimal mechanization differences between pinion and rack bar teeth.

Another object of the present invention is lowering manufacturing costs. By using the present invention the above-cited adjusting device is avoided thus eliminating as a part of said casing all the related components of said device of said conventional steering systems.

In order to reach the above cited goals including a second guiding bushing in an intermediate point of rack bar length inside said steering casing is purposed. This second guiding bushing allows the absorption of knocking effects created by axial component of joint loads.

The present invention also includes a novel concept related to rack bar teeth. Conventional rack bars include a toothed portion milled on the outer surface of this bar. In the present case said toothed portion does not form part of the rack bar itself, but said bar includes a key slot where a detachable toothed piece is lodged. Said detachable piece having prismatic shape and rectangular-cross section is seated on resilient loading means provided in said key slot so that said resilient means press said teeth of said detachable piece towards pinion teeth so as to keep said piece "floating" inside said key slot and assembled to the pinion. Thus radial loads generated by joints loads and mechanization differences are absorbed.

Said prismatic rectangular piece including rack teeth in its upper face and whose length is related to pinion angular play is assembled inside said key slot wherein resiliently deformable means such as an o-ring, pushing washer, spring washer or the like is provided.

Said resilient means can be arranged on key slot bottom lodged in corresponding seats along the longitudinal axis of said slot. Loads against this piece towards the pinion are uniformly distributed over said piece for obtaining a proper assembly with said pinion.

As will be readily appreciated conventional steering casings are greatly simplified introducing the floating-rack bar concept of the present invention with which a constant press between rack and pinion teeth is obtained even when radial loads are present thus eliminating noises and problems related thereof.

### Abstract of the Invention

The present invention is referred to improvements in steering casings for pinion-rack bar steering systems, particularly addressed to avoid undesirable noises created by relative separation between pinion and rack bar teeth as a response to joint load components. Said casing comprises a casing box normally affixed to the vehicle's chassis and wherein a rack bar is assembled with sliding seat on an end bushing of said casing box, having said bar an end portion projecting beyond said bushing outwards said casing box so as to be jointly linked to one of the vehicle's wheel, having said bar a rack toothed section in assembling relationship with the steering pinion and loaded by vehicle's wheels joint loads. Said joint loads create axial and radial loads which creates a spacing or gapping effect on pinion-rack teeth as well as noises when said teeth are re-positioned to their normal assembled position. Characterized said improvements because said rack bar toothed section is milled on an upper face of a detachable piece arranged in relation with the pinion, and assembled with radial-free play in a longitudinal key slot of said rack bar which in turn is extended through a pair of casing box bushings arranged at the end of this casing box, and in an intermediate point of said casing box between end bushing and pinion, being said detachable piece floating-seat assembled on elastic means arranged at the bottom of said groove, capable of permanently load said piece against said pinion, and against radial spacing loads created by wheels joints loading.

### Brief description of drawings

Other objects and details will became apparent for those skilled in the art in accordance with the following description based on the accompanying drawing as an exemplary and non-limiting illustration of the present invention in which:
Figure 1 is a partially cut-away top plan view in which the purposed improvements could be seen incorporated to the steering casing in accordance to the present invention.
Figure 2 is a cross sectional view of the purposed casing through line 1-1 of Figure 1 showing the floating rack bar assembled to the pinion.
Figure 3 shows in detail the inventive pinion-floating rack bar assembly and its loading system; finally:
Figures 4 and 5 show a prior art steering casing in a general plan and cross sectional views respectively illustrating the rack bar adjusting device in a stabilized position.

### Detailed description of the invention

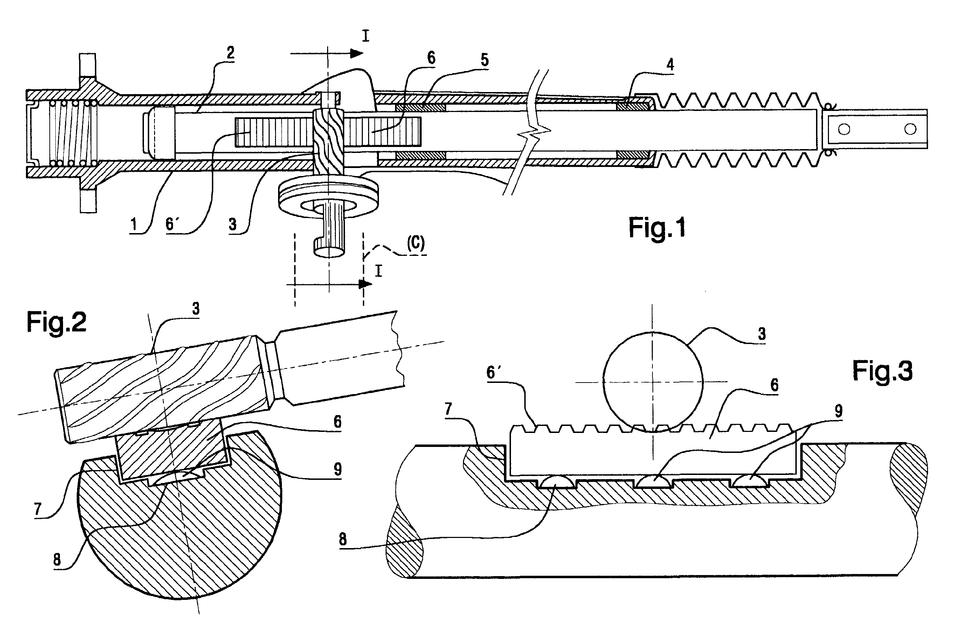

In accordance with the accompanying drawings, particularly with reference to Figures 1-3, where details of the purposed improvements are illustrated, a steering casing comprises a steering casing box 1 where the steering mechanism is lodged comprised by pinion 3 affixed to the steering column (c) and a rack bar 2. Illustrated steering casing 1 incorporating the present improvements corresponds to a powered steering type, but this should not be interpreted as a limitation of the present invention as it could also be applied to mechanical steering systems.

Making now reference to Figure 1 rack bar 2 lacks of a conventional toothed portion along its entire length for assembling it to the pinion 3. As is known in the art, said bar includes a projection end affixed to commanding bars of vehicle's wheels.

Unlike conventional rack bars the inventive rack bar is assembled inside said steering casing box 1 on a pair of bushings 4-5, and end bushing and a middle bushing, located the first one at the end of said box 1, and the remaining one (5) at a middle point of said box 1. Said bushings 4-5 thus forming a pair of guiding seats or a double longitudinal guide for this rack bar. When said bar is dragged by pinion 3, said bushings absorb knocking effects and longitudinal loads to which said bar is subjected due to loads present in vehicle's wheels joints.

In accordance to the present invention the functional relationship of rack bar 2 and pinion 3 is reached by incorporating a prismatic rectangular detachable piece 6, having on its upper face a toothed portion 6'. Even when it should not be interpreted as a limitation of the scope of protection, teeth of said toothed portion 6' could be obtained using a milling tool.

Said detachable piece 6 is lodged with free radial play inside a longitudinal key slot 7 facing pinion 3. Said key slot shaping corresponds to piece 6 shaping and piece and slot length correspond to angular play to which the vehicle's driving wheel could be subjected.

Bottom of said key slot may have longitudinally distributed seats 8 in which resilient means 9 are lodged backing on seats 8 against inner face of said detachable piece 6 for keeping said piece "floating" inside said key slot 7 and permanently assembled to pinion 3. Said "floating" effect is created by said resilient means pushing upwards said detachable piece 6 including assembling teeth against pinion 3.

Loads created by - said resilient means 9 against detachable piece 6 determines an assembly pressure of toothed portion 6' of rack bar 6 against pinion teeth 3 allowing a proper assembly relationship between them even when there are little mechanization differences between teeth of said pieces. At the same time said loads also avoids noises due to returning movements of rack bar in response to radial loads generated by joints loading.

Resilient means 9 may be plate type washers, spring washers, o-rings as well as any other proper means, which should be adapted in accordance with operative requirements of the purposed steering casing.

As is readily understood from the above and the attached drawings using the "floating" rack bar system of the present invention conventional knocking effects created by rack bar returning movements are avoided since detachable piece 6 has always a permanent assembly relationship with pinion 3. The above described double guide of bushings 4-5 contributing to eliminate undesirable loading to steering casing box 1.

Finally, by using the inventive improvements several pieces used in conventional rack bar adjusting device are eliminated decreasing final manufacturing costs.

## Claims

1. Improvements in casings for pinion-rack bar steering systems particularly addressed to eliminate undesirable noises in said casing, comprising a casing box rigidly affixed to vehicle's chassis wherein a rack bar is assembled slidingly seated on an end bushing having said rack bar a toothed portion in assembling relationship with a pinion affixed to the steering column end, vehicle's joint loading generating axial and radial components defines a spacing effect between said pinion and rack teeth as well as a returning effect of said rack to its normal position; **characterized** said improvements because said rack bar includes a longitudinal key slot wherein a toothed detachable piece is assembled with radial free play, said rack bar is slidingly assembled in two guiding bushings, being said detachable piece assembled on elastic means arranged at the bottom of said rack bar key slot.

2. Improvements in accordance to claim 1, characterized because said casing box includes two guiding bushings as an integral part thereof, a first end bushing and a second middle bushing arranged respectively at the end and the middle part of said casing box.

3. Improvements in accordance to claim 2, characterized because said middle bushing is arranged between said end bushing and said pinion.

4. Improvements in accordance to claim 1, characterized because said resilient means permanently pressing said detachable piece against said pinion defines a counter-effect against radial loading generated by joint assembly of vehicle's wheels.

5. Improvements in accordance to claim 1, characterized because said detachable piece is a prismatic rectangular piece.

6. Improvements in accordance to claim 1, characterized because said resilient means lodged in longitudinally aligned seats at the bottom of said key slot are rested on a face of said piece opposed to the toothed face of same.

7. Improvements in accordance -to claim 1, characterized because said resilient means are defined by plate type washers, spring washers, o-rings or the like.
